# EUROPÄISCHE PATENTSCHRIFT

(11) **EP 2 564 227 B1**
(45) Veröffentlichungstag und Bekanntmachung des Hinweises auf die Patenterteilung: **08.03.2017**
(21) Anmeldenummer: 11712774.6
(22) Anmeldetag: 05.04.2011
(51) Int. Cl.: G01S 3/781, G01S 3/801, G01S 5/16, G01S 5/28

(54) **VERFAHREN UND ANZEIGEGERÄT ZUR DARSTELLUNG DER AUFKLÄRUNGSERGEBNISSE BEI DER ORTUNG VON SCHUSSWAFFEN**
METHOD AND INDICATING DEVICE FOR PRESENTING THE RECONNAISSANCE RESULTS DURING THE LOCATING OF FIREARMS
PROCÉDÉ ET INSTRUMENT D'AFFICHAGE POUR LA REPRÉSENTATION DES RÉSULTATS D'UNE RECONNAISSANCE CONCERNANT LA LOCALISATION D'ARMES À FEU

(30) Priorität: 30.04.2010 DE 102010019109
(43) Veröffentlichungstag der Anmeldung: 06.03.2013
(73) Patentinhaber: Rheinmetall Defence Electronics GmbH, 28309 Bremen (DE)
(72) Erfinder: HERMSTRÜWER, Günther, 28832 Achim (DE); KLEMP, Jürgen, 28832 Achim (DE); KNÖTSCH, Rainer, 28832 Achim (DE)
(74) Vertreter: Greif, Thomas
(86) Internationale Anmeldenummer: PCT/EP2011/001677
(87) Internationale Veröffentlichungsnummer: WO 2011/134587

(56) Entgegenhaltungen:
- DE-T2- 69 526 139
- US-A- 5 638 298
- US-A1- 2005 237 186
- US-A1- 2006 050 929
- US-A1- 2008 165 047
- US-B1- 6 178 141

## Beschreibung

Die Erfindung betrifft ein Verfahren zur Darstellung der Aufklärungsergebnisse bei der Ortung von Schusswaffen und eine Anzeigegerät, auf der die Ergebnisse der Ortung dargestellt werden.

Zum Schutz von Personen in Krisengebieten sind räumliche Ortungssysteme bekannt, von denen abgegebene Schüsse bezüglich des Abstands der Feuerstellung und der Richtung zu den Feuerstellungen ausgewertet und angezeigt werden. Bei einem Beschuss müssen die Aufklärungsergebnisse dem Nutzer unmittelbar so angezeigt werden, dass die Bedrohungslage sofort erkennbar ist und Reaktionsmaßnahmen ergriffen werden können.

Von Gewehrschützen abgegebene Schüsse erzeugen extrem kurze Signaturen wie Mündungsblitze oder Knalle. Diese optischen und akustischen Ereignisse weisen zeitliche Längen in der Größenordnung von Millisekunden auf. Mündungsblitze sind im visuellen Bereich nur schwach ausgeprägt. Während Mündungsknalle an der Mündung des Gewehres entstehen und sich von dort ausbreiten, entsteht der Geschossknall durch das mit Überschall fliegende Geschoss. Der Geschossknall geht also nicht von der Feuerstellung, sondern von der Geschossbahn aus.

Diese Umstände machen es für eine bedrohte Person sehr schwierig, ohne automatische Verfahren zur Schützenerkennung die Richtung der Bedrohung und die Entfernung zur Feuerstellung zu ermitteln. Daher sind automatische akustische und/oder optronische Verfahren zur Ortung einer Schusswaffe bekannt, bei dem Mündungsblitze oder -knalle oder auch Geschossknalle automatisch erfasst und ausgewertet werden. Ein derartiges Verfahren ist in der DE 695 26 139 T2 beschrieben.

Als Anzeigegeräte sind am Mann getragene Geräte wie Armdisplays, PDAs etc. bekannt. An Fahrzeugen können größere Anzeigegeräte eingesetzt werden.

Auch sind Anzeigegeräte bekannt, auf denen ein Aufklärungsergebnis als Entfernungs-Peilungs-Polardiagramm dargestellt ist.

Die US 2008/165047 A1 beschreibt eine Vorrichtung und ein Verfahren zur Darstellung der Richtung und Entfernung von Schussereignissen zur Eigenposition auf einem kreisförmigen Display.

Die US 2006/050929 A1 offenbart eine vereinfachte Historie der Schussereignisse. Der Ursprungsort des Schussereignisses wird mit einem farbigen Punkt auf einer Karte gekennzeichnet. Im Verlauf der Zeit wird die Farbe der Markierung geändert und schließlich ganz ausgeblendet.

Für eine schnelle Auffassung ist es weiterhin bekannt, die Richtung der Bedrohung durch einen großen Alarmsektor zu markieren.

Bei Mehrfachfeuer, insbesondere aus wechselnden Feuerstellungen, ist es aus den vorstehend aufgeführten Gründen für einen Menschen kaum feststellbar, aus welchen Richtungen er beschossen wurde. Die bekannten Anzeigeverfahren sind dazu wenig geeignet, da bei der
Anzeige neuer Ergebnisse die Anzeige der älteren Ergebnisse überschrieben werden muss. Bei gleichzeitiger Anzeige mehrerer Ereignisse in den bekannten Systemen würde die Anzeige so komplex, dass sie nicht ausreichend schnell interpretiert werden könnte. Das Problem verstärkt sich bei Mehrfachfeuer aus wechselnden Feuerstellungen, da es Überschneidungen gibt, wenn sich die Richtungswinkel zu den Feuerstellungen nur um einen Winkel unterscheiden, der kleiner als der gewählte Alarmsektor-Bereich ist. Mehrfachfeuer oder Salven aus einer Feuerstellung oder gar aus mehreren Feuerstellungen wären daher nur bei dauernder Betrachtung der Anzeigen erkennbar. Dies ist in einer Gefahrensituation nicht möglich.

Der Erfindung liegt daher die Aufgabe zugrunde, ein Verfahren zur Darstellung der Aufklärungsergebnisse bei der Ortung einer Schusswaffe zu schaffen, das eine weitgehend vollständige Bewertung der Bedrohungslage in einer Anzeige auch bei Mehrfachfeuer und/oder wechselnden Feuerstellungen ermöglicht, damit unmittelbar auf die Bedrohung reagiert werden kann.

Diese Aufgabe wird nach der Erfindung dadurch gelöst, dass die Aufklärungsergebnisse so dargestellt werden, dass auf einem Display in einer ersten kreisförmigen Anzeige in Polarkoordinaten mit der Eigenposition als Kreiszentrum der Abstand zur Feuerstellung als Radialkoordinate und die Richtung zur Feuerstellung als Winkelkoordinate dargestellt werden. Benachbart zur ersten Anzeige ist eine kreisring- oder kreisförmige zweite Anzeige angeordnet, in der ebenfalls in Polarkoordinaten die Aufklärungsergebnisse von vorherigen Schussereignissen in deren zeitlichen Reihenfolge so angezeigt werden, dass die jeweilige Schusszeit als Radialkoordinate und die jeweilige Richtung zur Feuerstellung als Winkelkoordinate dargestellt sind.

Nach der Erfindung wird somit ein erstes Entfernungs-Peilungs-Polardiagramm mit einem zweiten polaren Zeit-Peilungs-Diagramm verknüpft. Dies ermöglicht es, in dem ersten Polardiagramm nur das jeweils aktuellste Ergebnis anzuzeigen. In dem zweiten Polardiagramm wird die Historie des Beschusses angezeigt. Dabei ist es möglich, Mehrfachfeuer aus einer Richtung oder Beschuss aus mehreren Feuerstellungen zu erkennen.

Bevorzugt ist eine zweite kreisringförmige äußere Anzeige um die erste innere kreisförmige Anzeige angeordnet. So können die beiden Darstellungen vorteilhaft miteinander kombiniert und sehr schnell bewertet werden.

Dabei wird bevorzugt ein Aufklärungsergebnis eines Schussereignisses an den entsprechenden Polarkoordinaten als Symbol angezeigt, das unmittelbar ins Auge fällt. Insbesondere ist es möglich, die Bedrohungslage durch eine entsprechende Farbkennzeichnung hervorzuheben.

Bevorzugt wird die Richtung zur Feuerstellung bei der inneren Anzeige in einem Kreissektor angezeigt, der sich entsprechend farbig gestaltet als Alarmsektor darstellen lässt, der sofort ins Auge fällt. Dies ist insbesondere bei einem Sektorwinkel zwischen 25° und 50°, beispielsweise von 45° oder 60°, der Fall. Abhängig von der vom Abstand zum vorbeifliegenden Geschoss abhängigen Alarmsituation lässt sich der Kreissektor farbig kennzeichnen, beispielsweise mit der Farbe Rot als höchste Alarmstufe.

Die zeitliche Abfolge der Ereignisse in der kreisringförmigen äußeren Anzeige wird bevorzugt von innen nach außen auf konzentrischen Kreisen dargestellt. Dann entspricht der radiale Abstand zwischen zwei konzentrischen Kreisen einem vorbestimmten Zeitintervall.

Bevorzugt werden in der äußeren Anzeige als Symbole farbige Kreisbogensegmente angezeigt. Die Farbe des Symbols wird dabei entsprechend der Alarmsituation vom Abstand zum vorbeifliegenden Geschoss bestimmt. Bevorzugt zeigt dabei die umfängliche Winkelposition des Kreisbogensegments die Richtung zur Feuerstellung und dessen Öffnungswinkel die Genauigkeit an, mit der die Richtung ermittelt werden konnte.

Nachfolgend wird die Erfindung anhand eines Ausführungsbeispiels näher erläutert. Dabei zeigt
Figur 1 ein Display, in dem die Aufklärungsergebnisse entsprechend der Erfindung dargestellt sind.
Die Figuren 2 bis 7 zeigen die zeitliche Abfolge von Anzeigen beim Beschuss mit einer Folge von Schüssen.

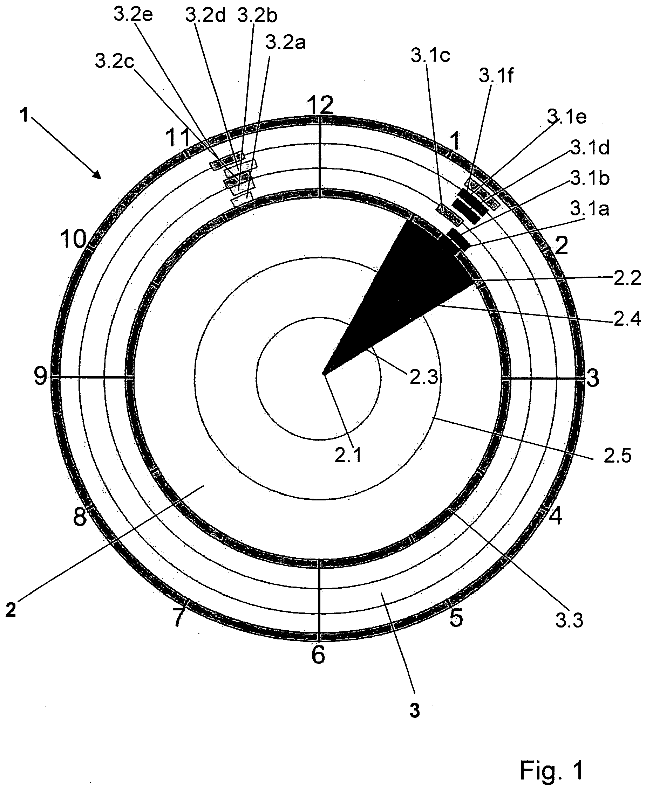

In den Figuren 1 bis 7 ist das Display 1 eines Anzeigegeräts zur Darstellung der Aufklärungsergebnisse bei der Ortung einer Schusswaffe dargestellt. Das Anzeigegerät ist Bestandteil eines Systems zur automatischen Schützenerkennung, das akustische und/oder optronische Empfangseinrichtungen und entsprechende Auswertesysteme enthält und dient zur Darstellung der bei der Auswertung erhaltenen Aufklärungsergebnisse. Das Anzeigegerät kann Teil einer von einer Person getragenen Ausrüstung sein, zum Beispiel in der Hand gehaltene Geräte oder Armdisplays, PDAs etc. Ebenso kann das Display Bestandteil eines größeren Anzeigegeräts sein, das an einem Fahrzeug befestigt ist.

Für das Display können die bekannten Anzeigetechnologien wie LCD, TFT, LED etc. verwendet werden.

Das Display 1 ist kreisförmig gestaltet und enthält eine erste kreisförmige Anzeige 2 und eine benachbart zur ersten Anzeige 2 angeordnete kreisring- oder kreisförmige zweite Anzeige 3. Diebeiden Anzeigen 2,3 können im Display getrennt nebeneinander angeordnet sein. Bevorzugt ist die zweite Anzeige 3 kreisringförmig und außen um die erste innere Anzeige 2 angeordnet, wie in den Figuren dargestellt ist.

In der ersten inneren Anzeige 2 werden in Polarkoordinaten mit der Eigenposition als Kreiszentrum 2.1 der Abstand zur Feuerstellung als Radialkoordinate und die Richtung zur Feuerstellung als Winkelkoordinate dargestellt. Die Richtung zur Feuerstellung wird in einem Kreissektor 2.2 angezeigt, der einen Sektorwinkel von kleiner als 60°, bevorzugt zwischen 25° und 50°, insbesondere 45° oder 60°, aufweist. Der Sektor 2.2 ist in einer die Alarmsituation kennzeichnenden Farbe dargestellt. Die Alarmsituation wird vom Abstand der Eigenposition von der ermittelten Feuerstellung bestimmt.

Wie in den Figuren dargestellt, wird das Aufklärungsergebnis eines Schussereignisses an den entsprechenden Polarkoordinaten als Symbol angezeigt. In der ersten inneren Anzeige 2 ist das Symbol ein Kreis 2.3, dessen Radialkoordinate - also der Abstand vom Mittelpunkt - den Abstand zur Feuerstellung und dessen Winkelkoordinate die Richtung zur Feuerstellung angibt. Bevorzugt wird das Symbol 2.3 auf einem zur Feuerstellung gerichteten Radius 2.4 angezeigt, der mittig durch den Kreissektor 2.2 verläuft. Damit von einer Person der Abstand zur Feuerstellung besser abgeschätzt werden kann, werden innerhalb der Anzeige konzentrische Kreislinien 2.5 äquidistant angezeigt. Der Abstand zwischen zwei Kreislinien 2.5 ist frei konfigurierbar. Er entspricht beispielsweise einem Abstand von 100 m oder 200 m zur Feuerstellung. Auf diese Weise wird von der inneren Anzeige 2 das aktuelle Schussereignis angezeigt.

In der zweiten kreisringförmigen äußeren Anzeige 3 werden ebenfalls in Polarkoordinaten die Aufklärungsergebnisse von vorherigen Schussereignissen in ihrer zeitlichen Abfolge und in ihrer jeweiligen Richtung zur Feuerstellung dargestellt. Dabei wird die jeweilige Schusszeit, zu der der Schuss abgegeben wurde, als Radialkoordinate und die jeweilige Richtung von der Eigenposition zur Feuerstellung wird als Winkelkoordinate dargestellt.

Bevorzugt wird in der zweiten äußeren Anzeige 3 die zeitliche Abfolge der Ereignisse von innen nach außen auf konzentrischen Kreisen dargestellt, wobei als Symbol 3.1, 3.2 ein konzentrisch angeordnetes Kreisbogensegment angezeigt wird. Die Radialkoordinate eines Symbols 3.1a - 3.1 f, 3.2a - 3.2e entspricht dem Zeitpunkt des jeweiligen Schusses. Die Winkelkoordinate der Position eines Symbols 3.2, 3.3 zeigt die Schussrichtung an. Weiterhin ist jedes Symbol 3.1, 3.2 in einer die Alarmsituation kennzeichnenden Farbe dargestellt. Der Grad der Alarmsituation wird hierbei vom Abstand zum jeweiligen vorbeifliegenden Geschoss bestimmt.

Beispielsweise ist die Farbcodierung zur Darstellung der Alarmsituation so gewählt, dass die Farbe Gelb einen Abstand von 10 m - 100 m, die Farbe orange einen Abstand von 3 m - 30 m, und die Farbe Rot einen Abstand von weniger als 10 m jeweils von der Eigenposition zur ermittelten Geschossbahn.

Die Darstellung der Symbole 3.1, 3.2 als Kreissegmente bietet die weitere Möglichkeit, die Genauigkeit der Schussrichtungsermittlung darzustellen. Die umfängliche Länge eines Kreisbogensegments 3.1, 3.2 entspricht dabei dem Bereich der möglichen Feuerstellung, also der Genauigkeit der Richtungsbestimmung zur Feuerstellung.

Um bei Schussfolgen den zeitlichen Abstand zwischen zwei Schüssen besser abschätzen zu können, enthält die zweite äußere Anzeige 3 äquidistante konzentrische Kreise, deren radialer Abstand einer bestimmten Zeitdauer entspricht, beispielsweise entspricht der radiale Abstand zwischen zwei Kreislinien einer Zeitdauer von 1 Min. oder 2 Min. Es werden zumindest vier Zeitzonen in der äußeren Anzeige 3 dargestellt.

Bei der beschriebenen Ausführungsform nach Figur 1 ist vorteilhaft das aktuelle Schussereignis nicht nur als Kreis 2.3 in der inneren Anzeige 2, sondern auch als Kreissegment 3.1 a im inneren Ring 3.3 der äußeren Anzeige 3 dargestellt.

Figur 1 zeigt zwei Schussfolgen mit der aktuellen Schussfolge 3.1a - 3.1f und der vorherigen Schussfolge 3.2a - 3.2e. Es werden gleichzeitig zwei Feuerstellungen angezeigt, aus denen Schüsse abgegeben werden.

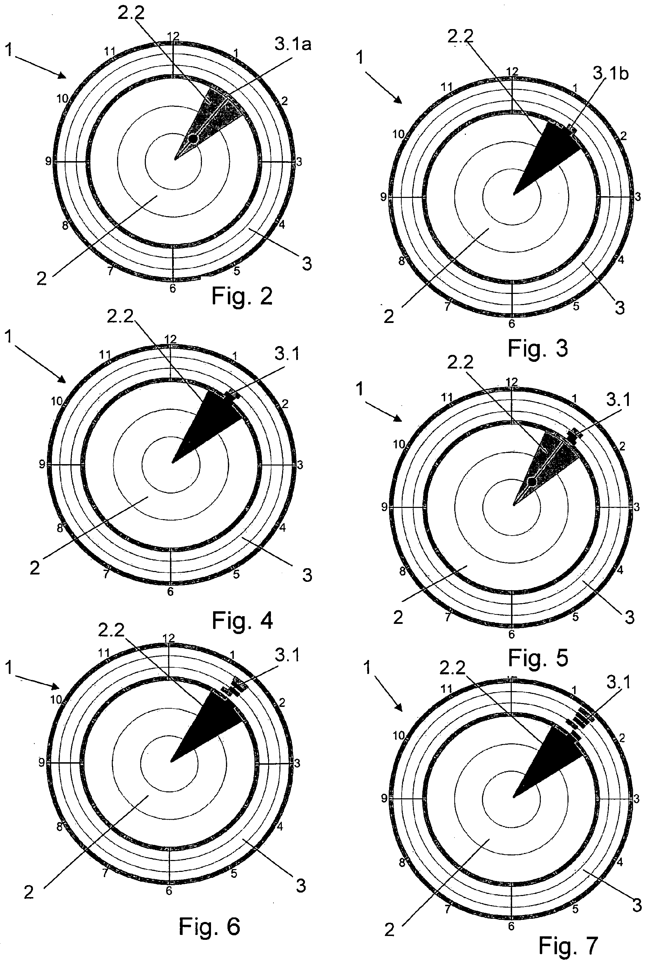

In den Figuren 2-7 ist die zeitliche Abfolge von Anzeigen einer Schussfolge dargestellt:
Der erste und aktuelle Schuss wurde in einem Abstand von ca. 100 m von einer Feuerstellung abgegeben, die sich zwischen der Position 1 und 2 befindet. Die Farbmarkierung des Sektors 2.2 ist gelb, daher betrug der Abstand zur Geschossbahn 10 m - 100 m. Der aktuelle Schuss ist in Figur 2 in der inneren Anzeige 2 als Kreis 2.3 in Sektor 2.2 und als Kreissegment 3.1a im inneren Ring 3.3 der äußeren Anzeige 3 dargestellt.

Figur 3 zeigt den nächsten Schuss in den Anzeigen 2,3. Seine Farbcodierung ist rot, da der Abstand zur Geschossbahn als weniger als 10 m bestimmt wurde. In der äußeren Anzeige 3 wird der vorherige Schuss radial nach außen verschoben. Er ist nun mit 3.1b bezeichnet. Beim nächsten Schuss werden die Anzeigen 2,3 entsprechend modifiziert. In der äußeren Anzeige 3 werden die vorhergehenden Schüsse entsprechend dem vergangenen Zeitintervall radial nach außen verschoben. Die innere Anzeige 2 zeigt wieder den aktuellen Schuss an (Figur 4).

Es folgen drei weitere Schüsse, die jeweils in den Figuren 5, 6 und 7 angezeigt werden. Die Darstellung in Figur 7 zeigt die Historie der Schussfolge. Es ist erkennbar, dass alle Schüsse aus einer Richtung abgegeben wurden. Die Richtung und Intensität der Bedrohung wird für einen Betrachter sehr deutlich dargestellt.

## Patentansprüche

1. Verfahren zur Darstellung der Aufklärungsergebnisse bei der Ortung einer Schusswaffe, wobei auf einem Display (1) in einer ersten kreisförmigen Anzeige (2) in Polarkoordinaten mit der Eigenposition als Kreiszentrum der Abstand zur Feuerstellung als Radialkoordinate und die Richtung zur Feuerstellung als Winkelkoordinate dargestellt werden, **dadurch gekennzeichnet, dass** in einer benachbart zur Anzeige (2) angeordneten kreisring- oder kreisförmigen zweiten Anzeige (3) ebenfalls in Polarkoordinaten die Aufklärungsergebnisse von vorherigen Schussereignissen in deren zeitlichen Abfolge so angezeigt werden, dass die jeweilige Schusszeit als Radialkoordinate und die jeweilige Richtung zur Feuerstellung als Winkelkoordinate dargestellt werden.

2. Verfahren nach Anspruch 1, **dadurch gekennzeichnet, dass** die zweite kreisring- oder kreisförmige Anzeige (3) als kreisringförmige äußere Anzeige um die erste innere kreisförmige Anzeige (2) angeordnet ist.

3. Verfahren nach Anspruch 1 oder 2, **dadurch gekennzeichnet, dass** ein Aufklärungsergebnis eines Schussereignisses an den entsprechenden Polarkoordinaten als Symbol (2.3, 3.1, 3.2) angezeigt wird.

4. Verfahren nach einem der Ansprüche 1 bis 3, **dadurch gekennzeichnet, dass** die Richtung zur Feuerstellung in einem Kreissektor (2.2) angezeigt wird.

5. Verfahren nach Anspruch 4, **dadurch gekennzeichnet, dass** der Kreissektor (2.2) einen Sektorwinkel von kleiner als 60°, bevorzugt zwischen 25° und 50°, aufweist.

6. Verfahren nach Anspruch 4 oder 5, **dadurch gekennzeichnet, dass** der Sektor (2.2) entsprechend der vom Abstand zum vorbeifliegenden Geschoss abhängigen Alarmsituation farbig gekennzeichnet wird.

7. Verfahren nach einem der Ansprüche 1 bis 6, **dadurch gekennzeichnet, dass** in der äußeren Anzeige (3) die zeitliche Abfolge der Ereignisse von innen nach außen auf konzentrischen Kreisen dargestellt ist.

8. Verfahren nach einem der Ansprüche 3 bis 7, **dadurch gekennzeichnet, dass** ein Symbol (3.1, 3.2) von der äußeren Anzeige (3) in einer die vom Abstand zum vorbeifliegenden Geschoss abhängigen Alarmsituation kennzeichnenden Farbe angezeigt wird.

9. Verfahren nach Anspruch 7 oder 8, **dadurch gekennzeichnet, dass** zumindest vier radiale Zeitzonen in der äußeren Anzeige (3) dargestellt werden.

10. Verfahren nach einem der Ansprüche 3 bis 9, **dadurch gekennzeichnet, dass** in der äußeren Anzeige (3) als Symbol (3.1, 3.2) ein Kreisbogensegment angezeigt wird, dessen umfängliche Winkelposition die Richtung zur Feuerstellung und dessen umfängliche Länge die Genauigkeit anzeigt, mit der die Richtung ermittelt werden konnte.

11. Anzeigegerät zur Darstellung der Aufklärungsergebnisse bei der Ortung einer Schusswaffe, dass ein Display (1) enthält, bei dem in einer ersten kreisförmigen Anzeige (2) in Polarkoordinaten mit der Eigenposition als Kreiszentrum der Abstand zur Feuerstellung als Radialkoordinate und die Richtung zur Feuerstellung als Winkelkoordinate dargestellt werden, **dadurch gekennzeichnet, dass** in einer benachbart zur ersten Anzeige (2) angeordneten kreisring- oder kreisförmigen zweiten Anzeige (3) ebenfalls in Polarkoordinaten die Aufklärungsergebnisse von vorherigen Schussereignissen in deren zeitlichen Abfolge so angezeigt werden, dass die jeweilige Schusszeit als Radialkoordinate und die jeweilige Richtung zur Feuerstellung als Winkelkoordinate dargestellt sind.

12. Anzeigegerät nach Anspruch 11, **dadurch gekennzeichnet, dass** die zweite kreisring- oder kreisförmige Anzeige (3) als kreisringförmige äußere Anzeige um die erste innere kreisförmige Anzeige (2) angeordnet ist.

13. Anzeigegerät nach Anspruch 11 oder 12, **dadurch gekennzeichnet, dass** es Mittel enthält, die Aufklärungsergebnisse gemäß einem der Verfahren nach den Patentansprüchen 1 bis 10 anzuzeigen.

## Claims

1. Method for presenting the reconnaissance results during the locating of a firearm, the distance from the firing position as a radial coordinate and the direction of the firing position as an angular coordinate being presented on a display (1) in a first circular indicator (2) in polar coordinates, with the own position as the centre of the circle, **characterized in that** the reconnaissance results of previous firing events are indicated in a circular-ring-shaped or circular second indicator (3), adjacent to the indicator (2), likewise in polar coordinates in the chronological order thereof in such a way that the respective firing time is presented as a radial coordinate and the respective direction of the firing position is presented as an angular coordinate.

2. Method according to Claim 1, **characterized in that** the second circular-ring-shaped or circular indicator (3) is arranged as a circular-ring-shaped outer indicator around the first inner circular indicator (2).

3. Method according to Claim 1 or 2, **characterized in that** a reconnaissance result of a firing event is indicated at the corresponding polar coordinates as a symbol (2.3, 3.1, 3.2).

4. Method according to one of Claims 1 to 3, **characterized in that** the direction of the firing position is indicated in a sector of a circle (2.2).

5. Method according to Claim 4, **characterized in that** the sector of a circle (2.2) has a sector angle of less than 60°, preferably between 25° and 50°.

6. Method according to Claim 4 or 5, **characterized in that** the sector (2.2) is identified by a colour corresponding to the alarm situation dependent on the distance from the projectile flying past.

7. Method according to one of Claims 1 to 6, **characterized in that** the chronological sequence of the events is presented in the outer indicator (3) on concentric circles from the inside outwards.

8. Method according to one of Claims 3 to 7, **characterized in that** a symbol (3.1, 3.2) of the outer indicator (3) is indicated in a colour identifying an alarm situation dependent on the distance from the projectile flying past.

9. Method according to Claim 7 or 8, **characterized in that** at least four radial time zones are presented in the outer indicator (3).

10. Method according to one of Claims 3 to 9, **characterized in that** indicated as a symbol (3.1, 3.2) in the outer indicator (3) is a circular arc segment, the circumferential angular position of which indicates the direction of the firing position and the circumferential length of which indicates the accuracy with which it was possible to determine the direction.

11. Indicating device for presenting the reconnaissance results during the locating of a firearm, that includes a display (1), on which the distance from the firing position as a radial coordinate and the direction of the firing position as an angular coordinate are presented in a first circular indicator (2) in polar coordinates, with the own position as the centre of the circle, **characterized in that** the reconnaissance results of previous firing events are indicated in a circular-ring-shaped or circular second indicator (3), adjacent to the first indicator (2), likewise in polar coordinates in the chronological order thereof in such a way that the respective firing time is presented as a radial coordinate and the respective direction of the firing position is presented as an angular coordinate.

12. Indicating device according to Claim 11, **characterized in that** the second circular-ring-shaped or circular indicator (3) is arranged as a circular-ring-shaped outer indicator around the first inner circular indicator (2).

13. Indicating device according to claim 11 or 12, **characterized in that** it includes means for indicating the reconnaissance results by one of the methods according to Patent Claims 1 to 10.

## Revendications

1. Procédé de représentation du résultat d'une reconnaissance concernant la localisation d'une arme à feu, dans lequel, sur un premier affichage (2) circulaire en coordonnées polaires, la position de l'observateur étant le centre du cercle, la distance à l'arme à feu est représentée en tant que coordonnée radiale et la direction du point de tir est représentée en tant que coordonnées angulaire, sur un affichage (1), **caractérisé en ce que**, sur un deuxième affichage (3) annulaire ou circulaire disposé au voisinage de l'affichage (2), les résultats d'une reconnaissance d'événements de tir antérieurs sont également affichés en coordonnées polaires suivant leur séquence temporelle de manière à ce que l'instant de tir respectif soit représenté en tant que coordonnée radiale et à ce que la direction respective du point de tir soit représentée en tant que coordonnée angulaire.

2. Procédé selon la revendication 1, **caractérisé en ce que** le deuxième affichage (3) annulaire ou circulaire est disposé autour du premier affichage circulaire intérieur (2) en tant qu'affichage extérieur annulaire.

3. Procédé selon la revendication 1 ou 2, **caractérisé en ce qu'**un résultat d'une reconnaissance d'un événement de tir est affiché aux coordonnées polaires correspondantes sous la forme d'un symbole (2.3, 3.1, 3.2).

4. Procédé selon l'une quelconque des revendications 1 à 3, **caractérisé en ce que** la direction du point de tir est affichée dans un secteur circulaire (2.2).

5. Procédé selon la revendication 4, **caractérisé en ce que** le secteur circulaire (2.2) présente un angle de secteur inférieur à 60°, et de préférence compris entre 25° et 50°.

6. Procédé selon la revendication 4 ou 5, **caractérisé en ce que** le secteur (2.2) est **caractérisé par** une couleur d'une manière qui correspond à la situation d'alarme en fonction de la distance au projectile en vol.

7. Procédé selon l'une quelconque des revendications 1 à 6, **caractérisé en ce que** la séquence temporelle des événements est représentée sur l'affichage extérieur (3) sur des cercles concentriques de l'intérieur vers l'extérieur.

8. Procédé selon l'une quelconque des revendications 3 à 7, **caractérisé en ce qu'**un symbole (3.1, 3.2) de l'affichage extérieur (3) est représenté avec une couleur caractérisant la situation d'alarme en fonction de la distance au projectile en vol.

9. Procédé selon la revendication 7 ou 8, **caractérisé en ce qu'**au moins quatre zones temporelles radiales sont représentées sur l'affichage extérieur (3).

10. Procédé selon l'une quelconque des revendications 3 à 9, **caractérisé en ce qu'**un segment d'arc de cercle est affiché sur l'affichage extérieur (3) sous la forme d'un symbole (3.1, 3.2) dont la position angulaire initiale indique la direction du point de tir et dont la longueur initiale indique la précision avec laquelle la direction a pu être déterminée.

11. Appareil d'affichage destiné à représenter les résultats d'une reconnaissance lors de la localisation d'une arme à feu que comporte un affichage (1), dans lequel la distance au point de tir est représentée en tant que coordonnée polaire sur un premier affichage circulaire (2), la position de l'observateur étant le centre du cercle, et la direction du point de tir est représentée en tant que coordonnée angulaire, **caractérisé en ce que**, sur un deuxième affichage (3) annulaire ou circulaire disposé au voisinage du premier affichage (2), les résultats de la reconnaissance d'événements de tir antérieurs sont également affichés suivant leur séquence temporelle en coordonnées polaires de manière à ce que l'instant de tir respectif soit représenté en tant que coordonnée radiale et à ce que la direction respective du point de tir soit représentée en tant que coordonnée angulaire.

12. Appareil d'affichage selon la revendication 11, **caractérisé en ce que** le deuxième affichage (3) annulaire ou circulaire est disposé autour du premier affichage circulaire intérieur (2) en tant qu'affichage extérieur annulaire.

13. Appareil d'affichage selon la revendication 11 ou 12, **caractérisé en ce que** celui-ci contient des moyens destinés à afficher des résultats d'une reconnaissance conformément à un procédé selon les revendications 1 à 10.
